# EUROPÄISCHE PATENTSCHRIFT

(11) **EP 0 815 152 B1**
(45) Veröffentlichungstag und Bekanntmachung des Hinweises auf die Patenterteilung: **10.11.1999**
(21) Anmeldenummer: 96907339.4
(22) Anmeldetag: 04.03.1996
(51) Int. Cl.: C08G 18/66, C08G 18/48, C08F 2/30, C08F 2/20

(54) **SCHUTZKOLLOIDE**
PROTECTIVE COLLOIDS
COLLOIDES PROTECTEURS

(30) Priorität: 11.03.1995 DE 19508856
(43) Veröffentlichungstag der Anmeldung: 07.01.1998
(73) Patentinhaber: Cognis Deutschland GmbH, 40589 Düsseldorf (DE)
(72) Erfinder: BAUMANN, Carsten, D-40789 Monheim (DE); FEUSTEL, Dieter, D-40789 Monheim (DE); HÜBNER, Norbert, D-40597 Düsseldorf (DE)
(86) Internationale Anmeldenummer: EP9600899
(87) Internationale Veröffentlichungsnummer: WO9628489

(56) Entgegenhaltungen:
- DE-A- 4 242 687
- FR-A- 2 539 135
- US-A- 3 660 010
- US-A- 4 337 184

## Beschreibung

Die Erfindung liegt auf dem Gebiet der Polymerisation von ungesättigten Monomeren in wäßrigem Medium und betrifft Schutzkolloide für derartige Polymerisationen, wobei es sich bei diesen Schutzkolloiden um wasserlösliche nichtionische Polyurethane handelt, hergestellt aus Polyisocyanaten, wasserlöslichen Polyalkylenglykolen mit einem Ethylenglykolanteil von mindestens 70 Gew.-% und verzweigten Alkoholen mit mindestens 3 Hydroxylgruppen, die durch ein bestimmtes Verhältnis von wasserlöslichen Polyalkylenglykolen und mehrwertigen verzweigten Alkoholen gekennzeichnet sind.

Schutzkolloide werden hauptsächlich in Suspensions-, Emulsions- und Dispersionspolymerisationen eingesetzt. Suspensionspolymerisationen sind Polymerisationen von wasserunlöslichen Monomeren in Wasser, wobei die Polymerisationen in Monomertröpfchen ablaufen, die durch öllösliche Initiatoren gestartet werden. Das Suspendieren der wasserunlöslichen Monomeren in Wasser in viele kleine Monomertröpfchen erfolgt durch Zusatz eines Suspendiermittels. Emulsionspolymerisationen sind in der Regel radikalische Polymerisationen von in Wasser emulgierten wasserunlöslichen Monomeren. Bei Emulsionspolymerisationen läuft die Polymerisation im Gegensatz zu den Suspensionspolymerisationen nicht in Monomertröpfchen, sondern in Mizellen bzw. Latexteilchen ab, die durch Zusatz von grenzflächenaktiven Substanzen (Emulgatoren, Detergentien, Seifen) erzeugt werden. Es gibt auch Emulsionspolymerisationen, die emulgatorfrei ablaufen, wobei deren genauer Reaktionsmechanismus noch nicht bekannt ist.

Dispersionspolymerisationen sind "umgekehrte" Emulsionspolymerisationen, bei denen eine wäßrige Phase in einer organischen dispergiert ist.

In den aufgezählten Polymerisationen haben Schutzkolloide die Aufgabe, die Polymerdispersionen während und nach der Polymerisation der Monomeren zu stabilisieren. Dies erfolgt durch Adsorption der Schutzkolloide an der Oberfläche der Polymerteilchen, was eine sterische Hinderung bewirkt, die das Koagulieren der Polymerteilchen unterbindet. Gängige Schutzkolloide sind wasserlösliche teil- und vollverseifte Polyvinylacetate mit verschiedenen Polyvinylalkohol-Anteilen, die es zudem in verschiedenen Molekulargewichten gibt. Je höher das Molekulargewicht der Polyvinylacetat/Polyvinylalkohole ist, desto höher können die Viskositäten der Dispersionen der Polymere bzw. Polymerteilchen eingestellt werden.

Weitere bekannte Schutzkolloide sind Polyvinylpyrrolidon, Celluloseether, Stärke und Cellulose. Derartige bekannte Schutzkolloide sind in ihrer Funktion durchaus leistungsfähig, obgleich bei Zusatz von Polyvinylacetat/Polyvinylalkohol als Schutzkolloid die Gefrier/Tau-Stabilität der fertigen Polymerdispersionen zu verbessern ist.

Da Schutzkolloide jedoch im Polymer verbleiben, kann es mit den bekannten Schutzkolloiden zu unerwünschter Beeinträchtigung der Polymereigenschaften kommen. So sind beispielsweise Polymerfilme auf Basis von Emulsionspolymerisaten des Vinylacetats unter Verwendung der gängigen Schutzkolloide stets sehr hart und zudem alkali- und wasserempfindlich. Es wäre wünschenswert, wenn derartige Polymerfilme eine verbesserte Wasser- und Alkalibeständigkeit aufweisen, sowie wesentlich weicher wären, wodurch sich der Einsatz von externen Weichmachern reduzieren bzw. ganz vermeiden ließe.

Aus der WO 94/13726 ist bekannt, daß wasserlösliche Polyurethane, hergestellt aus Diisocyanaten, einem wasserlöslichen Polyethylenglykol sowie ggf. einem hydrophoben Diol als Schutzkolloid bei der Emulsionspolymerisation verwendet werden können. Bei Einsatz dieser wasserlöslichen Polyurethane als Schutzkolloid bei der Emulsionspolymerisation werden stabile Dispersionen von Polyvinylacetat bzw. dem Copolymeren aus Vinylacetat und Maleinsäuredibutylester erhalten. Filme, die aus diesen Dispersionen gewonnen werden, sind zudem relativ weich und wasserfest.

Nachteilig an den aus der WO 94/13726 bekannten Polyurethanen ist, daß mit derartigen Polyurethanen nur mehr oder weniger eine bestimmte Viskosität in den hergestellten Polymerdispersionen eingestellt werden kann.

Von seiten der Polymerdispersionshersteller werden aber Schutzkolloide à la Polyvinylacetat/Polyvinylalkohol gewünscht, wo über die Variation der Molekulargewichte der Schutzkolloide die Viskositäten der Polymerdispersionen gezielt eingestellt werden können.

Aus der EP-B-334 032 sind Oligourethane mit verzweigter Molekülstruktur bekannt, die endständig hydrophile Gruppierungen aufweisen. Bevorzugt werden als hydrophile Gruppen ionische wie Carboxylat- oder quaternäre Ammoniumgruppen. Diese Oligourethane werden aus Polyisocyanaten, hydrophoben mehrwertigen Polyolen sowie monofunktionellen Verbindungen mit hydrophilen Gruppen der oben beschriebenen Art hergestellt. Sie können als Emulgator für die Emulsionspolymerisation verwendet werden.

Aufgabe der vorliegenden Erfindung war es, Schutzkolloide zur Verfügung zu stellen, die durch Variation ihrer chemischen Struktur in der Lage sind, Viskositäten der Polymerdispersionen gezielt einzustellen. Zudem sollten die aus dem Polymerdispersionen erhältlichen Filme eine verbesserte Wasser- und Alkalistabilität aufzeigen, sowie verhältnismäßig weich sein, um den Einsatz von externen Weichmachern zu reduzieren bzw. zu vermeiden.

Selbstverständlich sollten die Schutzkolloide auch stabile Dispersionen der Polymeren ermöglichen, vor allem eine gesteigerte Gefrier-Tau-Stabilität.

Die Aufgabe wurde gelöst durch wasserlösliche nichtionische Polyurethane als Schutzkolloide für die Polymerisation von olefinisch ungesättigten Monomeren in wäßrigem Medium, dadurch gekennzeichnet, daß die wasserlöslichen nichtionischen Polyurethane hergestellt worden sind durch Umsetzung von
a) organischen Polyisocyanaten mit
b) wasserlöslichen Polyalkylenglykolen mit mindestens 70 Gew.-% Ethylenglykoleinheiten sowie mit
c) mehrwertigen verzweigten Alkoholen mit mindestens 3 Hydroxylgruppen pro Molekül,
wobei das Äquivalentverhältnis von b):c) im Bereich von 1:0,01 bis 1:10 und das Äquivalentverhältnis [b) + c)] : a) im Bereich von 1 : 0,6 bis 1 : 0,85 liegt.

Im Sinne der Erfindung ist mit "nichtionisch" gemeint, daß das Polyurethan keine ionischen Gruppen als emulgierende Gruppen aufweist, also keine Carboxylat-, Sulfonat-, Phosphonat- oder Ammoniumgruppen. Die Dispergierbarkeit des Polyurethans ergibt sich vielmehr durch das Vorhandensein der wasserlöslichen Polyalkylenglykole, die mindestens 70 Gew.-% Ethylenglykoleinheiten - bezogen auf Polyalkylenglykole -, vorzugsweise mindestens 80 Gew.-% Ethylenglykoleinheiten, enthalten. "Wasserlöslich" sind im Sinne der Erfindung die Polyalkylenglykole sofern mehr als 10 g in 100 g Wasser bei 20 °C über 6 Monate gelöst bleiben.

Ethylenglykoleinheiten entsprechenden der Formel -[CH₂-CH₂-O]ₙ-, wobei n den Oligomerisierungsgrad angibt.

Als wasserlösliche Polyalkylenglykole sind Polyethylenglykole geeignet, die durch Polyaddition von Ethylenoxid an Wasser oder an Ethylenglykol als Startmolekül hergestellt werden, aber auch Polyadditionsprodukte von Ethylenoxid an andere niedermolekulare Diole wie Butandiol, Hexandiol oder 4,4'Dihydroxydiphenylpropan. Es können auch mehrere wasserlösliche Polyethylenglykole eingesetzt werden, die sich im durchschnittlichen Molekulargewicht unterscheiden. Ebenso geeignet sind Copolymere von Ethylenoxid und Propylenoxid, sofern der Gehalt an Ethylenglykoleinheiten mindestens 70 Gew.-% - bezogen auf Copolymer -, vorzugsweise mindestens 80 Gew.-% beträgt.

Besonders bevorzugt sind wasserlösliche Polyethylenglykole, die ein mittleres Molekulargewicht von 500 bis 100.000, vorzugsweise von 1.000 bis 20.000 und insbesondere von 3.000 bis 12.000 aufweisen.

Erfindungswesentlich ist, daß als weitere Polyolkomponente verzweigte Alkohole mit mindestens 3 Hydroxylgruppen pro Molekül zur Herstellung der Polyurethane eingesetzt werden, wobei von besonderer Bedeutung auch das Äquivalentverhältnis der oben beschriebenen Polyalkylenglykole zu den verzweigten Alkoholen mit 3 Hydroxylgruppen ist.

Als verzweigte Alkohole mit mindestens 3 Hydroxylgruppen werden bevorzugt Trimethylolpropan, Pentaerythrit, Glycerin, Di-Trimethylolpropan, Di-Pentaerythrit sowie deren Alkoxylate eingesetzt. Geeignete Alkoxylate sind beispielsweise Trimethylolpropan mit 5 bis 10 mol Propylenoxid. Insbesondere geeignet ist Trimethylolpropan.

Über das Äquivalentverhältnis von den wasserlöslichen Polyalkylenglykolen zu den verzweigten Alkoholen mit mindestens 3 Hydroxylgruppen kann nun die chemische Modifikation des Polyurethans erhalten werden, die eine gezielte Viskosität der fertigen Polymerdispersionen einstellen kann. Dabei gilt, daß die Viskosität der fertigen Polymerdispersionen um so höher eingestellt werden kann, je höher der gewählte Anteil an verzweigten Alkoholen mit mindestens 3 Hydroxylgruppen im Verhältnis zu den wasserlöslichen Polyalkylenglykolen ist. Bevorzugt liegt das Äquivalentverhältnis von wasserlöslichen Polyalkylenglykolen zu den verzweigten Alkoholen mit mindestens 3 Hydroxylgruppen im Bereich von 0,1 bis 5, insbesondere von 0,1 bis 3.

Bei wesentlich niederen Äquivalentmengen an wasserlöslichen Polyalkylenglykolen als den angegebenen Bereichen könnte es zu Schwierigkeiten bei der Selbstdispergierung der Polyurethane kommen. Wesentlich höhere Äquivalentmengen an wasserlöslichen Polyalkylenglykolen als den angegebenen Bereichen verschlechtern die Einstellungsmöglichkeiten der Viskositäten der fertigen Polymerdispersionen.

Als Polyisocyanate sind Diisocyanate sowie die durch Trimerisierung eines Teils der Isocyanatgruppen von Diisocyanaten entstehende Produkte geeignet.

Beispielsweise seien als geeignete Isocyanate genannt 1,5-Naphthylendiisocyanat, 4,4'-Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenyldiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester, ferner Diisocyanate mit reaktionsfähigen Halogenatomen, wie 1-Chlormethylphenyl-2,4-diisocynat, 1-Brommethylphenyl-2,6-diisocyanat, 3,3,-Bis-chlormethylether-4,4'-diphenyldiisocyanat, Schwefelhaltige Polyisocyanate erhält man beispielsweise durch Umsetzung von 2 mol Hexamethylen-diisocyanat mit 1 mol Thiodiglykol oder Dihydroxydihexylsulfit. Weitere wichtige Diisocyanate sind Trimethylhexamethylendiisocyanat, 1,4-Diisocyanatobutan, 1,12-Diisocyanatododecan und Dimerfettsäurediisocyanat. Besonders geeignet sind: Tetramethylen-, Hexamethylen-, Undecan-, Dodecanmethylen-, 2,2,4-Trimethylhexan-, 1,3-Cyclohexan-, 1,4-Cyclohexan-, 1,3- bzw. 1,4-Tetramethylxylol-, Isophoron-, 4,4-Dicyclohexylmethan- und Lysinester-Diisocyanat. Ganz besonders bevorzugt ist das Tetramethylxyloldiisocyanat, insbesondere das m-TMXDI von der Fa. Cyanamid.

Das Äquivalentverhältnis OH:NCO, wobei bei "OH" als die Summe der Polyalkylenglykole und verzweigten Alkoholen mit mindestens 3 Hydroxylgruppen zu verstehen ist, also von b)+c), kann in weiten Bereichen schwanken. Bevorzugt wird mit einem NCO-Unterschuß gearbeitet, so daß sich als bevorzugte Äquivalentverhältnisse von OH:NCO von 1:0,99 bis 1:0,5, vorzugsweise von 1:0,9 bis 1:0,55 und insbesondere von 1:0,85 bis 1:60 ergeben.

Die erfindungsgemäßen Polyurethane können sowohl in einem einstufigen als auch in einem zweistufigen Verfahren hergestellt werden. In dem zweistufigen Verfahren wird zunächst ein Prepolymeres hergestellt, indem ein Teil der Polyole, z.B. die hydrophilen Polyalkylenglykole, mit dem Diisocyanat vorreagieren. Dann wird das verzweigte Polyol zugesetzt.

Vorzugsweise wird das erfindungsgemäße Polyurethan jedoch in einem einstufigen Verfahren hergestellt. Dabei werden zunächst alle Ausgangsstoffe gegebenenfalls in Gegenwart eines organischen Lösungsmittels bei einem Wassergehalt von weniger als 0,5 Gew.-% gemischt. Die Mischung wird auf 70 bis 200 °C, insbesondere auf 75 bis 180 °C und vorzugsweise auf 80 bis 170 °C ca. 1 bis 30 Stunden erhitzt. Die Reaktionszeit kann durch Anwesenheit von Katalysatoren verkürzt werden. Insbesondere sind tertiäre Amine als Katalysatoren brauchbar, z.B. Triethylamin, Dimethylbenzylamin, Bis-Dimethylaminoethylether und Bis-Methylaminomethylphenol. Besonders geeignet sind 1-Methylimidazol, 2-Methyl-1-vinylimidazol, 1-Allylimidazol, 1-Phenylimidazol, 4-Dimethylamino-pyridin, 4-Pyrrolidinopyridin, 4-Morpholinopyridin, 4-Methylpyridin. Vorzugsweise wird jedoch ohne Katalysator gearbeitet. Auch das Lösungsmittel wird zweckmäßigerweise weggelassen. Als Lösungsmittel werden inerte organische flüssige Stoffe mit einem Siedepunkt unter 200 °C bei Normaldruck verstanden.

Die Polyurethane sind bei Raumtemperatur wachsartige bis feste Verbindungen. Die beschriebenen Polyurethane sind in jedem Verhältnis mit Wasser mischbar und werden vorzugsweise als wäßrige Lösungen oder Dispersionen als Schutzkolloid eingesetzt.

Ein weiterer Gegenstand der vorliegenden Erfindung betrifft ein Verfahren zur Herstellung von wäßrigen Dispersionen von Polymerisaten von olefinisch ungesättigten Monomeren in Gegenwart von Schutzkolloiden, dadurch gekennzeichnet, daß als Schutzkolloide wasserlösliche nichtionische Polyurethane hergestellt durch Umsetzung von
a) organischen Polyisocyanaten mit
b) wasserlöslichen Polyalkylenglykolen mit mindestens 70 Gew.-% Ethylenglykoleinheiten sowie mit
c) mehrwertigen verzweigten Alkoholen mit mindestens 3 Hydroxylgruppen pro Molekül,
wobei das Äquivalentverhältnis von b):c) im Bereich von 1:0,01 bis 1:10 und das Äquivalentverhältnis [b) + c)] : a) im Bereich von 1:0,6 bis 1:0,85 liegt, zugegen sind.

Einzelheiten zu den Schutzkolloiden sind den vorigen Ausführungen zu entnehmen.

Das Verfahren zur Herstellung der wäßrigen Polymerisaten kann nach den an sich bekannten Mechanismen der Suspensions-, Emulsions- oder Dispersionspolymerisation verlaufen, wobei unter üblichen Temperaturen, vorzugsweise von 10 bis 150 °C, mit üblichen Polymerisationsinitiatoren in üblichen Mengen, vorzugsweise Peroxide, Peroxodisulfate oder Azoverbindungen in Mengen von 0,05 bis 5 Gew.-% bezogen auf Monomeren, ggf. in Anwesenheit üblicher Suspendiermittel oder Emulgatoren in üblichen Mengen polymerisiert wird. Die Polymerisation kann diskontinuierlich, kontinuierlich oder im Zulaufverfahren durchgeführt werden.

Das Verfahren eignet sich zur Herstellung von wäßrigen Dispersionen von Polymerisaten von unterschiedlichster olefinisch ungesättigten Monomeren, beispielsweise solche wie sie in der schon zitierten EP-334 032 aufgezählt werden.

Vorzugsweise werden nach dem erfindungsgemäßen Verfahren wäßrige Dispersionen von Polymerisaten von Acryl- und Methacrylsäureester mit 1 bis 12 C-Atomen im Alkoholrest, Acrylsäure, Methacrylsäure sowie die C₂-C₄-Hydroxyalkylester dieser Säuren, Styrol, Acryl- und Methacrylsäurenitril, Vinylacetat, Vinylpropionat, Vinylchlorid und Vinylidenchlorid hergestellt und insbesondere von Vinylacetat und Vinylchlorid. Es können nach den Verfahren Homo- und Copolymere hergestellt werden, wobei besonders gute Ergebnisse des erfindungsgemäßen Verfahrens unter Einsatz des Schutzkolloids bei der Herstellung wäßriger Dispersionen von Polyvinylacetat, Polyvinylchlorid sowie Copolymeren des Ethylen und Vinylacetats erzielt werden.

Es hat sich als vorteilhaft erwiesen, daß die Schutzkolloide in Mengen von 0,01 bis 20 Gew.-% - bezogen auf die Dispersion, vorzugsweise 0,05 bis 15 Gew.-%, zugegen sind.

Werden redispergierbare Polymere erwünscht, sind die Schutzkolloide im oberen Bereich der angegebenen Menge zugegen. Für Emulsionspolymerisationen sind in der Regel 1,5 bis 10 Gew.-% - bezogen auf die Dispersion - an Schutzkolloid ausreichend. Die nach erfindungsgemäßen Verfahren hergestellten wäßrigen Dispersionen der Polymerisate sind stabile, nahezu koagulatfreie, lager- und versandfertige Dispersionen, die zudem eine sehr gute Gefrier-Tau-Stabilität aufweisen.

Die nach dem erfindungsgemäßen Verfahren hergestellten Polymerdispersionen sind vielfältig anwendbar. So sind die wäßrigen Dispersionen von Polymerisaten von olefinisch ungesättigten Monomeren verwendbar zur Herstellung von Beschichtungen auf beliebigen Substraten, beispielsweise zur Beschichtung bzw. zum Überziehen und zum Imprägnieren von gewebten und nicht gewebten Textilien, Leder, Metallen, Keramik, Stein, Beton, Kunststoffe, Papier und für Glas und Porzellan.

Ein besonders wichtiges Anwendungsgebiet ist die Verwendung der wäßrigen Polymerdispersionen für den Innen- und Außenanstrich auf Verputz, Beton, Mauerwerk, Holz und Papier.

Eine weitere Verwendung der nach dem erfindungsgemäßen Verfahren hergestellten wäßrigen Polymerdispersionen liegt bei den Klebstoffen, wo sie als Basis beispielsweise zur Herstellung von wasserlöslichen Schmelzklebstoffen oder wiederbefeuchtbaren Klebstoffen für Papier, Wandbelag und Etiketten eingesetzt werden können.

### Beispiele

### A) Herstellung und Eigenschaften der Polyurethane

### Beispiel A1)

In einem 2 l Dreihalskolben mit Rührer, N₂-Zuleitung wurden 95 Teile Polywachs 6000 (Polyethylenglykol Lipoxol der Fa. Hüls; entsprechend 1 Äquivalent) sowie 0,53 Teile Trimethylolpropan (entsprechend 0,35 Äquivalente) 2 Stunden bei 80 °C und 1 mbar Unterdruck entwässert und danach mit Stickstoff belüftet. Anschließend wurden 4,47 Teile m-TMXDI (Fa. Cyanamid; entsprechend 1,08 Äquivalente) zugegeben und bei 145 °C gerührt. Nach etwa 3 Stunden war der theoretische NCO-Gehalt von 0 % erreicht.

### Beispiel A2)

Es wurde analog A1) gearbeitet, jedoch mit 94,3 Teilen Polywachs 6000, (entsprechende 1 Äquivalent), 0,75 Teilen Trimethylolpropan (entsprechend 0,5 Äquivalenten) und 4,9 Teilen TMXDI (entsprechend 1,2 Äquivalenten).

### Beispiel A3)

Es wurde analog A1) gearbeitet, jedoch mit 93,2 Teilen Polywachs 6000, (entsprechend 1 Äquivalent), 1,1 Teilen Trimethylolpropan (entsprechend 0,75 Äquivalenten) und 5,7 Teilen TMXDI (entsprechend 1,4 Äquivalenten).

### B) Herstellung der wäßrigen Polymer-Dispersionen

### B1) Herstellung einer wäßrigen Polyvinylacetat-Dispersion

In einem Reaktionsgefäß, das mit Rührer, Thermometer, zwei Zutropfgefäßen sowie einem Rückflußkühler versehen war, wurden in 394,25 g entsalztem Wasser 10 g eines Umsetzungsproduktes von p-Nonylphenol ethoxyliert mit 10 Ethylenoxid, 0,5 g Natriumhydrogencarbonat und 75 g einer 40 gew.-%igen wäßrigen Lösung der nach A1), A2) oder A3 hergestellten Polyurethane bei Raumtemperaturen gemischt und auf 65 °C erwärmt. Zu dieser Lösung wurde bei 65 °C eine Lösung aus 0,5 g Natriumformaldehydsulfoxylat in 10 g entsalztem Wasser gegeben. Im Zutropfgefäß A wurden 459 g Vinylacetat Monomer bereitgestellt. Im Zutropfgefäß B wurden eine Mischung aus 0,75 g t-Butylhydroperoxid und 50 g entsalztem Wasser bereitgestellt.

Bei Temperaturen von 72 °C wurde mit der kontinuierlichen Dosierung aus den Zutropfgefäßen A und B begonnen. Nach Einsetzen der Polymerisation wurde die kontinuierliche Dosierung aus A und B so gesteuert, daß sich eine Reaktionstemperatur von 72 bis 80 °C einstellte. Die Reaktionsdauer beträgt ca. 3 Stunden. Man ließ noch 1 Stunde den Ansatz nachreagieren bei über 80 °C.

Alle erhaltenen Dispersionen sind stabile koagulatfreie Dispersionen mit guter Gefrier-Tau-Stabilität (16 Stunden Einfrieren bei -20 °C, 8 Stunden auftauen etc.). In Tabelle I sind die Viskositäten der erhaltenen Polymerdispersionen (nach Brookfield in mPas bei 25 °C) zu finden. Die erhaltenen wäßrigen Polymerdispersionen wurden auf einer Glasplatte für die Wasser- und Alkalibeständigkeit in einer Schichtdicke von 100 µ und für die Pendelhärte nach König mit einer Schichtdichte von 250 µ aufgerakelt. Die Eigenschaften der erhaltenen Filme sind ebenfalls in Tabelle I wiedergegeben.

**Tabelle 1**

| Polymerdispersion mit Schutzkolloid | Viskosität der Polymerdispersion [mPas] | Wasserbeständigkeit³⁾ | Alkalibeständigkeit¹⁾ | Pendelhärte nach König [in s] |
|---|---|---|---|---|
| A1) | 16.000 | 3 | 2 | 79 |
| A2) | 35.000 | 2 | 2 | 63 |
| A3) | 56.000 | 1 | 1 | 59 |
| 40 gew.-%ige wäßrige Lösung von Polyvinylalcohols der Fa. Hoechst Mowiol 23-88 ²⁾ | 15.000 | 5 | 4 | 140 |

| | | | | |
|---|---|---|---|---|
| ¹⁾ gegen 10 gew.-%ige Natronlauge | | | | |
| ²⁾ Vergleich | | | | |
| ³⁾ subjektive Notenskala von 1 bis 6, wobei 1 sehr gut ist. | | | | |

Aus Tabelle I ist ersichtlich, daß über die Trimethylolpropan-Äquivalentmengen im Polyurethan (Schutzkolloid), die Viskosität der Polymerdispersion gezielt eingestellt werden kann. Des weiteren ist zu entnehmen, daß die Wasser- und Alkalistabilität der aus den Polymerdispersionen erhältlichen Filme gegenüber Filmen, die unter Zusatz handelsüblicher Schutzkolloide erhältlich sind, verbessert sind. Schließlich zeigt die Pendelhärte nach König, daß die Filme weicher sind als die unter Zusatz von gewöhnlichen Schutzkolloide erhältlichen Filme (niedere Werte entsprechenden weichere Filme).

### B2) Herstellung einer wäßrigen Ethylen-co-Vinylacetat-Dispersion

In einem Druckreaktor, der mit Rührer, Zudosiermöglichkeiten, Vakuum-, Ethylen-, Stickstoffleitungen sowie Heiz- und Kühlmöglichkeiten versehen war, wurden 154,1 kg vollentsalztes Wasser, 9,8 kg einer 25 gew.-%igen Lösung eines ethoxylierten Nonylphenols mit im Mittel 23 Ethylenoxideinheiten und 14,1 kg einer 40 gew.-%igen Lösung eines nach A2) hergestellten Polyurethans vorgelegt, mit Essigsäure der pH auf 4 gestellt und 0,47 kg einer 1 gew.-%igen Eisenammoniumsulfat-Lösung zugegeben. Nach Stickstoffspülung wurden 23,7 kg Vinylacetat einemulgiert, die Vorlage auf 65 °C aufgeheizt und der Ethylendruck auf 22 bar eingestellt. Die Polymerisation wurde durch Zudosieren von jeweils 11,9 kg einer 3 gew.-%igen Peroxodisulfatlösung und einer 1,5 gew.-%igen Na-Hydroxymethansulfinat-Lösung initiiert. Nach Beginn der Initiatordosierung wurden 213,3 kg Vinylacetat und eine Mischung von 22,3 kg einer 40 gew.-%igen Lösung der obengenannten Polyurethan-Dispersion und von 9,5 kg einer 50 gew.-%igen Lösung von N-Methylolacrylamid zudosiert. Nach Reaktionsende wurde der Ansatz abgekühlt und abgeblasen. Es wurde mit 0,133 kg t-Butylhydroperoxid und 0,052 kg Na-Hydroxymethansulfinat jeweils in 0,97 kg Wasser nachpolymerisiert. Es resultierten stabile, koagulatfreie Dispersionen.

### B3) Herstellung einer wäßrigen PVC-Dispersion nach der Suspensionspolymerisation

In einem Druckreaktor wurden 1278,8 g vollentsalztes Wasser, 2 g einer 40 gew.-%igen wäßrigen Dispersion des Polyurethans nach Beispiel A2), 0,2 g Natriumhydrogencarbonat, 0,8 g Sorbitanmonolaurat sowie 0,64 g Perkadox^{R} 16 der Fa. Akzo (Peroxo-Initiator) vorgelegt. Es wurden 800 g Vinylchlorid in den Druckreaktor eingebracht, wobei sich ein Druck von 9,2 bis 9,8 bar einstellte. Bei einer Temperatur von 55 °C wurden 3,5 Stunden polymerisiert und weitere 5 Stunden nachpolymerisiert. Die Reaktion wurde abgebrochen, sofern der Druck unter 5 bar sank. Es wurde entgast, um überschüssiges Monomer zu entfernen.

Es wurde eine stabile, koagulatfreie Dispersion erhalten.

Nach Trocknung der Dispersion erhielt man in einer Ausbeute von 82 % ein PVC-Pulver mit einem Schüttgewicht von 430 g/l.

## Patentansprüche

1. Wasserlösliche nichtionische Polyurethane als Schutzkolloide für die Polymerisation von olefinisch ungesättigten Monomeren in wäßrigem Medium, dadurch gekennzeichnet, daß die wasserlöslichen nichtionischen Polyurethane hergestellt worden sind durch Umsetzung von
a) organischen Polyisocyanaten mit
b) wasserlöslichen Polyalkylenglykolen mit mindestens 70 Gew.-% Ethylenglykoleinheiten sowie mit
c) mehrwertigen verzweigten Alkoholen mit mindestens 3 Hydroxylgruppen pro Molekül,
wobei das Äquivalentverhältnis von b):c) im Bereich von 1:0,01 bis 1:10, das Äquivalentverhältnis [b) + c)] : a) im Bereich von 1 : 0,6 bis 1 : 0,85 liegt.

2. Polyurethane nach Anspruch 1, dadurch gekennzeichnet, daß sie hergestellt worden sind durch Umsetzung von wasserlöslichen Polyethylenglykolen mit mittleren Molekulargewichten von 500 bis 100.000.

3. Polyurethane nach Anspruch 1 oder 2, dadurch gekennzeichnet, daß sie hergestellt worden sind durch Umsetzung von mehrwertigen verzweigten Alkoholen mit mindestens 3 Hydroxylgruppen pro Molekül ausgewählt aus der von Trimethylolpropan, Glycerin, Pentaerythrit, Di-Trimethylolpropan, Di-Pentaerythrit und deren Alkoxylate gebildeten Gruppe.

4. Polyurethane nach Anspruch 1, dadurch gekennzeichnet, daß das Äquivalentverhältnis von b):c) im Bereich von 0,1 bis 5 liegt.

5. Polyurethane nach Anspruch 1, dadurch gekennzeichnet, daß das Polyisocyanat Tetramethylxylyldiisocyanat (TMXDI) ist.

6. Verfahren zur Herstellung von wäßrigen Dispersionen von Polymerisaten von olefinisch ungesättigten Monomeren in Gegenwart von Schutzkolloiden, dadurch gekennzeichnet, daß als Schutzkolloide wasserlösliche nichtionische Polyurethane hergestellt durch Umsetzung von
a) organischen Polyisocyanaten mit
b) wasserlöslichen Polyalkylenglykolen mit mindestens 70 Gew.-% Ethylenglykoleinheiten sowie mit
c) mehrwertigen verzweigten Alkoholen mit mindestens 3 Hydroxylgruppen pro Molekül,
wobei das Äquivalentverhältnis von b):c) im Bereich von 1:0,01 bis 1:10 und das Äquivalentverhältnis [b) + c)] : a) im Bereich von 1 : 0,6 bis 1 : 0,85 liegt, zugegen sind.

7. Verfahren nach Anspruch 6, dadurch gekennzeichnet, daß wäßrige Dispersionen von Polymerisaten von Vinylacetat und Vinylchlorid hergestellt werden.

8. Verfahren nach Anspruch 6, dadurch gekennzeichnet, daß die Polyurethane als Schutzkolloide in Mengen von 0,01 bis 20 Gew.-% - bezogen auf Gesamtmasse der Dispersion - zugegen sind.

9. Verwendung der nach Anspruch 6 hergestellten wäßrigen Dispersionen von Polymerisaten von olefinisch ungesättigten Monomeren zur Herstellung von Beschichtungen auf beliebigen Substraten.

10. Verwendung der nach Anspruch 6 hergestellten Dispersionen von Polymerisaten von olefinisch ungesättigten Polymeren als Basis für Klebstoffe.

## Claims

1. Water-soluble nonionic polyurethanes as protective colloids for the polymerization of olefinically unsaturated monomers in aqueous medium, characterized in that the water-soluble nonionic polyurethanes have been produced by reaction of
a) organic polyisocyanates with
b) water-soluble polyalkylene glycols containing at least 70% by weight of ethylene glycol units and with
c) polyhydric branched alcohols containing at least three hydroxyl groups per molecule,
the equivalent ratio of b) to c) being in the range from 1:0.01 to 1:10 and the equivalent ratio of [b)+c)] to a) being in the range from 1:0.6 to 1:0.85.

2. Polyurethanes as claimed in claim 1, characterized in that they have been produced by reaction of water-soluble polyethylene glycols with average molecular weights in the range from 500 to 100,000.

3. Polyurethanes as claimed in claim 1 or 2, characterized in that they have been produced by reaction of polyhydric branched alcohols containing at least three hydroxyl groups per molecule selected from the group consisting of trimethylol propane, glycerol, pentaerythritol, ditrimethylol propane, dipentaerythritol and alkoxylates thereof.

4. Polyurethanes as claimed in claim 1, characterized in that the equivalent ratio of b) to c) is in the range from 0.1 to 5:1.

5. Polyurethanes as claimed in claim 1, characterized in that the polyisocyanate is tetramethylene xylylene diisocyanate (TMXDI).

6. A process for the production of aqueous dispersions of polymers of olefinically unsaturated monomers in the presence of protective colloids, characterized in that water-soluble nonionic polyurethanes produced by reaction of
a) organic polyisocyanates with
b) water-soluble polyalkylene glycols containing at least 70% by weight of ethylene glycol units and with
c) polyhydric branched alcohols containing at least three hydroxyl groups per molecule,
the equivalent ratio of b) to c) being from 1:0.01 to 1:10 and the equivalent ratio of [b)+c)] to a) being in the range from 1:0.6 to 1:0.85,
are present as the protective colloids.

7. A process as claimed in claim 6, characterized in that aqueous dispersions of polymers of vinyl acetate and vinyl chloride are produced.

8. A process as claimed in claim 6, characterized in that the polyurethanes are present as protective colloids in quantities of 0.01 to 20% by weight, based on the total weight of the dispersion.

9. The use of the aqueous dispersions of polymers of olefinically unsaturated monomers produced by the process claimed in claim 6 for the production of coatings on any substrates.

10. The use of the dispersions of polymers of olefinically unsaturated monomers produced by the process claimed in claim 6 as a basis for adhesives.

## Revendications

1. Polyuréthanes non ioniques solubles dans l'eau, comme colloïdes protecteurs pour la polymérisation de monomères à insaturation oléfinique en milieu aqueux, caractérisés en ce que lesdits polyuréthanes non ioniques solubles dans l'eau ont été produits en faisant réagir
a) des polyisocyanates organiques avec
b) des polyalkylèneglycols solubles dans l'eau comportant au moins 70 % en poids d'unités d'éthylèneglycol ainsi qu'avec
c) des alcools ramifiés polyvalents possédant au moins 3 groupes hydroxyle par molécule,
le rapport des équivalents entre b) et c) étant situé dans l'intervalle de 1:0,01 à 1:10, et le rapport des équivalents entre b) +c) et a) étant compris dans la plage de 1:0,6 à 1:0,85.

2. Polyuréthanes selon la revendication 1, caractérisés en ce qu'ils sont préparés en faisant réagir des polyéthylèneglycols présentant un poids moléculaire moyen de 500 à 100.000.

3. Polyuréthanes selon la revendication 1 ou 2, caractérisés en ce qu'ils sont préparés en faisant réagir des alcools ramifiés polyvalents comportant au moins 3 groupes hydroxyle par molécule, sélectionnés parmi le groupe formé du triméthylolpropane, de la glycérine, du pentaérythrite, du di-triméthylolpropane, du di-pentaérythrite ainsi que des alcoxylates de ceux-ci.

4. Polyuréthanes selon la revendication 1, caractérisés en ce que le rapport des équivalents entre b) et c) se situe dans l'intervalle de 0,1 à 5.

5. Polyuréthanes selon la revendication 1, caractérisés en ce que le polyisocyanate est le tétraméthylxylyldiisocyanate (TMXDI).

6. Procédé de production de dispersions aqueuses de polymères de monomères à insaturation oléfinique, en présence de colloïdes protecteurs, caractérisé en ce que sont présents comme colloïdes protecteurs, des polyuréthanes non ioniques solubles dans l'eau, produits en faisant réagir
a) des polyisocyanates organiques avec
b) des polyalkylèneglycols solubles dans l'eau comportant au moins 70 % en poids d'unités d'éthylèneglycol ainsi qu'avec
c) des alcools ramifiés polyvalents possédant au moins 3 groupes hydroxyle par molécule,
le rapport des équivalents entre b) et c) étant situé dans l'intervalle de 1:0,01 à 1:10, et le rapport des équivalents entre b) +c) et a) étant compris dans la plage de 1:0,6 à 1:0,85.

7. Procédé selon la revendication 6, caractérisé en ce que les dispersions aqueuses sont préparées à partir de polymères d'acétate et de chlorure de vinyle.

8. Procédé selon la revendication 6, caractérisé en ce que les polyuréthanes sont présents comme colloïdes protecteurs en proportions de 0,01 à 20 % en poids (par rapport à la masse totale de la dispersion).

9. Utilisation des dispersions aqueuses produites selon la revendication 6 de polymères de monomères à insaturation oléfinique pour la préparation d'enduits sur des substrats quelconques.

10. Utilisation des dispersions aqueuses produites selon la revendication 6 de polymères de monomères à insaturation oléfinique comme base pour des colles.
